# EUROPÄISCHE PATENTSCHRIFT

(11) **EP 1 090 527 B1**
(45) Veröffentlichungstag und Bekanntmachung des Hinweises auf die Patenterteilung: **22.02.2006**
(21) Anmeldenummer: 99936380.7
(22) Anmeldetag: 01.06.1999
(51) Int. Cl.: H04Q 7/38

(54) **VERFAHREN ZUR ÜBERTRAGUNG VON ORGANISATIONSINFORMATIONEN**
METHOD FOR TRANSMITTING ORGANIZATIONAL INFORMATION
PROCEDE POUR TRANSMETTRE DES INFORMATIONS D'ORGANISATION

(30) Priorität: 23.06.1998 DE 19827913
(43) Veröffentlichungstag der Anmeldung: 11.04.2001
(73) Patentinhaber: SIEMENS AKTIENGESELLSCHAFT, 80333 München (DE)
(72) Erfinder: BENZ, Michael, D-13629 Berlin (DE); KLEIN, Anja, D-10709 Berlin (DE); SITTE, Armin, D-10405 Berlin (DE); ULRICH, Thomas, D-67098 Bad Dürkheim (DE)
(86) Internationale Anmeldenummer: PCT/DE1999/001612
(87) Internationale Veröffentlichungsnummer: WO 1999/067966

(56) Entgegenhaltungen:
- US-A- 5 301 359
- US-A- 5 353 332
- DATTA A ET AL: "ADAPTIVE BROADCAST PROTOCOLS TO SUPPORT POWER CONSERVANT RETRIEVAL BY MOBILE USERS" INTERNATIONAL CONFERENCE ON DATA ENGINEERING,US,LOS ALAMITOS, CA: IEEE COMPUTER SOC, Seite 124-133 XP000787172 ISBN: 0-8186-7808-9

## Beschreibung

Die Erfindung betrifft ein Verfahren zur Übertragung von Organisationsinformationen von einer Basisstation zu Mobilstationen in einem Funk-Kommunikationssystem, insbesondere in einem Mobilfunksystem mit breitbandigen Kanälen, in denen Signale nach einem CDMA- oder TDMA/CDMA-Teilnehmerseparierungsverfahren übertragen werden.

In Funk-Kommunikationssystemen werden Informationen (beispielsweise im GSM-Mobilfunknetz die Spracheinformationen) mit Hilfe von elektromagnetischen Wellen über eine Funkschnittstelle zwischen sendender und empfangender Funkstation (Basisstation bzw. Mobilstation) übertragen. Das Abstrahlen der elektromagnetischen Wellen erfolgt dabei mit Trägerfrequenzen, die in dem für das jeweilige System vorgesehenen Frequenzband liegen. Für zukünftige Mobilfunksysteme mit CDMA- oder TDMA/CDMA-Ubertragungsverfahren über die Funkschnittstelle, beispielsweise das UMTS (Universal Mobile Telecommunication System) oder andere Systeme der 3. Generation sind Frequenzen im Frequenzband von ca. 2000 MHz vorgesehen.

Zur Übertragung von Organisationsinformationen sind verschiedene Verfahren bekannt siehe zum Beispiel die Druckschrift DATTA A ET AL: "ADAPTIVE BROADCAST PROTOCOLS TO SUPPORT POWER CONSERVANT RETRIEVAL BY MOBILE USERS" INTERNATIONAL CONFERENCE ON DATA ENGINEERING,US,LOS ALAMITOS, CA: IEEE COMPUTER SOC, Seite 124-133, XP000787172 ISBN: 0-8186-7808-9
oder die Patentschrift US-A-5 353 332 (MULLER WALTER G A ET AL) 4. Oktober 1994 (1994-10-04), die dazu dienen, Mobilstationen in einer Funkzelle einer Basisstation mit den für die Funkzelle nötigen Daten zu versorgen. Organisationsinformationen sind Angaben über die Funkzelle, deren Kanalstruktur und in der Funkzelle verfügbare Dienste und Optionen. Die Organisationsinformationen dienen somit der Mobilstation zur Synchronisation und Auswahl der Funkzelle.

Aus dem GSM-Mobilfunksystem und für zukünftige Mobilfunksystem aus DE 198 10 285 ist es bekannt, pro Rahmen in Abwärtsrichtung einen Zeitschlitz zur Übertragung von Organisationsinformationen vorzusehen. Dazu wird üblicherweise der erste Zeitschlitz des Rahmens herangezogen und die Informationen in Funkblöcken, d.h. burstartig übertragen. Damit liegen feste Abstände zwischen den Aussendungen der Organisationsinformationen vor, die derart geplant sind, daß auch in ungünstigen Verkehrslaststituationen und bei maximal erlaubter Geschwindigkeit der Mobilstationen eine ordnungsgemäße Auswertung der Organisationsinformationen und eine Übergabe der Mobilstationen zwischen verschiedenen Funkzellen unterstützt wird.

Da die Ressourcen zur Übertragung von Organisationsinformationen begrenzt sind, um nicht die Kapazität der Funkschnittstelle über Gebühr einzuschränken, besteht bei der Einführung neuer Dienste das Problem, zu diesen Diensten gehörige Organisationsinformationen den Mobilstationen zu übertragen.

Der Erfindung liegt die Aufgabe zugrunde, ein Verfahren zur Übertragung von Organistationsinformationen anzugeben, das eine große Anzahl von Diensten unterstützt. Diese Aufgabe wird durch das Verfahren mit den Merkmalen des Anspruchs 1 gelöst. Vorteilhafte Weiterbildungen sind den Unteransprüchen zu entnehmen.

Erfindungsgemäß werden beim Verfahren zur Übertragung von Organisationsinformationen von einer Basisstation zu Mobilstationen in einem Funk-Kommunikationssystem, welches innerhalb einer Funkzelle der Basisstation mehrere Dienste anbietet, die Organisationsinformationen in erste und zweite Organisationsinformationen anhand der momentan nachgefragten Dienste untergliedert und nur die ersten Organisationsinformationen gesendet. Damit werden alle aktuell benötigen Informationen, z.B. für einen Verbindungsaufbau, zur Verfügung gestellt und trotzdem für neue Dienste der Möglichkeit einer Integration von deren Organisationsinformationen in den Organisationskanal offen gehalten.

Nach einer vorteilhaften Weiterbildung der Erfindung wird eine Neuuntergliederung der Organisationsinformationen bei einer Nachfrage des Dienstes durch die Mobilstation oder durch eine netzseitige Komponente durchgeführt. Die Struktur der gesendeten Organisationsinformationen ist damit ständig bedarfsorientiert.

Weiterhin ist es vorteilhaft, die am häufigsten benötigten Organisationsinformationen ständig den ersten Organisationsinformationen zuzuteilen. Diese Organisationsinformationen sind beispielsweise Informationen zur einfachen Sprachinformationensübertragung oder Paketdatenübertragung.

Die Übertragung über die Funkschnittstelle erfolgt vorteilhafterweise nach einer Rahmenstruktur, wobei die Elemente der Organisationsinformationen mit unterschiedlicher Häufigkeit innerhalb der Rahmenstruktur gesendet werden. Über häufiger nachgefragte Dienste oder Standardinformationen der Funkzelle und deren Nachbarn wird besser informiert, als über außergewöhnliche Dienste oder Ereignisse, die beispielsweise mit der Inbetriebnahme einer Basisstation oder der Einführung eines Dienstes, z.B. Software Download, verbunden sind. In diesen Fällen ist es vorteilhaft, daß einzelne Elemente der Organisationsinformationen nur auf Anfrage gesendet werden.

Nach einer Ausbildung der Erfindung ist ein Zeitgeber vorgesehen, der das Senden der Organisationsinformationen überwacht, so daß eine Gruppe von Elementen der Organisationsinformationen auch ohne Anfrage, nach einer vorgebbaren Zeit zumindest einmal gesendet werden. Die Grundversorgung an Informationen ist damit bei geringstem Ressourcenverbrauch garantiert.

Im folgenden wird die Erfindung anhand von Ausführungsbeispielen bezugnehmend auf zeichnerische Darstellungen näher erläutert.

Dabei zeigen
- Fig 1: ein Blockschaltbild eines Mobilfunksystems,
- Fig 2: eine schematische Darstellung der Rahmenstruktur des Übertragungsverfahrens,
- Fig 3: eine schematische Gliederung eines Funkblocks mit Organisationsinformationen, und
- Fig 4: einen vereinfachten Ablaufplan der Neustrukturierung der Organisationsinformationen.

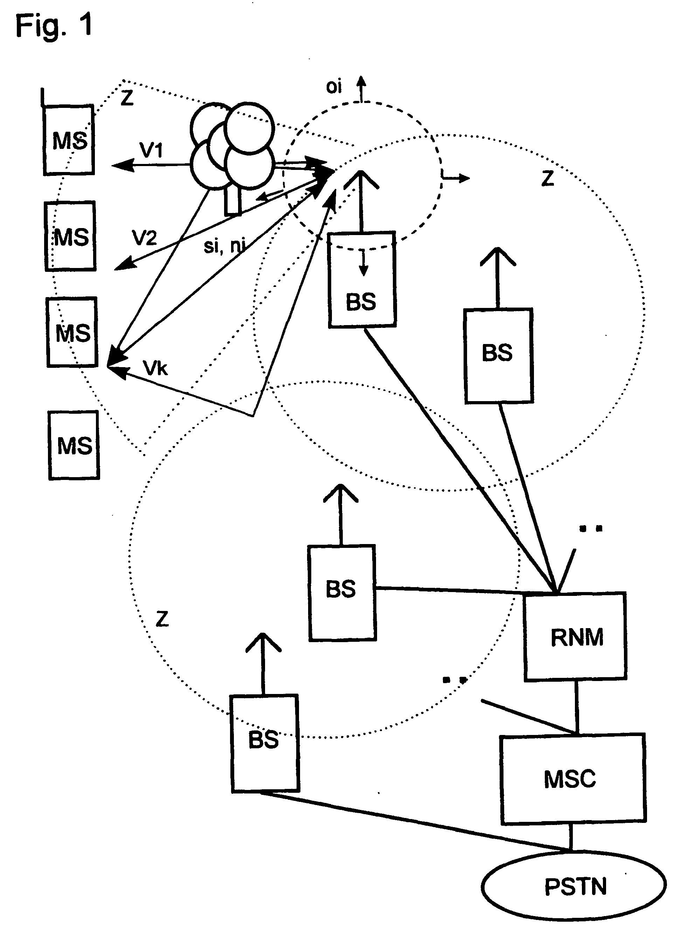

Das in Fig 1 dargestellte Mobilfunksystem als Beispiel eines Funk-Kommunikationssystems besteht aus einer Vielzahl von Mobilvermittlungsstellen MSC, die untereinander vernetzt sind bzw. den Zugang zu einem Festnetz PSTN herstellen. Weiterhin sind diese Mobilvermittlungsstellen MSC mit jeweils zumindest einer Einrichtung RNM zum Zuteilen von funktechnischen Ressourcen verbunden. Jede dieser Einrichtungen RNM ermöglicht wiederum eine Verbindung zu zumindest einer Basisstation BS. Eine solche Basisstation BS kann über eine Funkschnittstelle eine Verbindung zu weiteren Funkstationen, z.B. Mobilstationen MS oder anderweitigen mobilen und stationären Endgeräten aufbauen. Durch jede Basisstation BS wird zumindest eine Funkzelle Z gebildet. Bei einer Sektorisierung oder bei hierarchischen Zellstrukturen werden pro installierter Basisstation BS auch mehrere Funkzellen Z versorgt. Die Einrichtung RNM zum Zuteilen von funktechnischen Ressourcen und mehrere Basisstationen BS bilden ein Basisstationssystem.

In Fig 1 sind Verbindungen V, beispielhaft als V1, V2, Vk bezeichnet, zur Übertragung von Nutzinformationen ni und Signalisierungsinformationen si zwischen Mobilstationen MS und einer Basisstation BS dargestellt. Die Übertragung von Organisationsinformationen oi erfolgt an mehrere Mobilstationen MS in Form einer Punkt-zu-Multipunkt-Verbindung.

Ein Operations- und Wartungszentrum OMC realisiert Kontroll-und Wartungsfunktionen für das Mobilfunksystem bzw. für Teile davon. Die Funktionalität dieser Struktur ist auf andere Funk-Kommunikationssysteme übertragbar, in denen die Erfindung zum Einsatz kommen kann, insbesondere für Teilnehmerzugangsnetze mit drahtlosem Teilnehmeranschluß. Auch Basisstationen, die als Heimbasisstationen im privatem Bereich eingesetzt sind ohne von der Funknetzplanung betroffen zu sein, können Verbindungen zu Mobilstationen MS aufbauen. Diese Heimbasisstationen sind an ein Festnetz angeschlossen.

Ohne die Allgemeinheit des Verfahrens einzuschränken wird im folgenden Bezug auf ein TDD-Übertragungsverfahren mit einer TDMA/CDMA-Teilnehmerseparierung Bezug genommen, daß in DE 198 17 771 gezeigt ist.

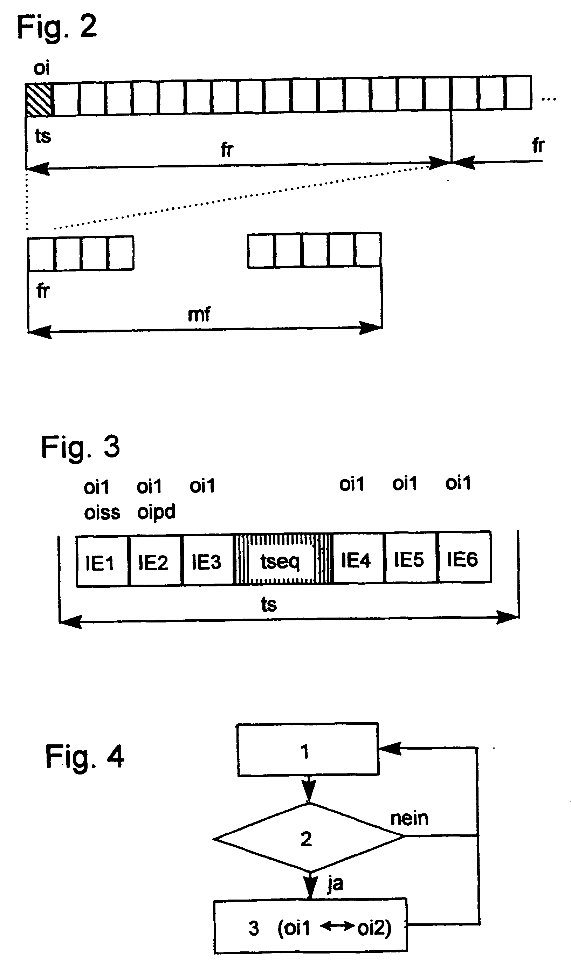

In einem breitbandigen Frequenzband wird eine TDMA-Teilnehmerseparierung angewandt, so daß ein Rahmen fr mit 16 Zeitschlitzen ts entsteht, siehe Figur 2. Die Zeitschlitze ts eines Rahmens fr werden sowohl für die Aufwärts- als auch für die Abwärtsrichtung zur Übertragung von Informationen oi, si, ni genutzt. Zwischen den Übertragungsrichtungen liegt ein Umschaltpunkt. Der erste Zeitschlitz des Rahmens fr dient beispielsweise fortlaufend zur Übertragung von Organisationsinformationen oi von der Basisstation BS zu den Mobilstationen MS. Auch eine diesbezüglich variable Nutzung physikalischer Kanäle ist möglich. Mehrere Rahmen fr werden zu einem Multirahmen mf zusammengefaßt. Weiterhin können wiederum mehrere Multirahmen mf zu einem Rahmen höherer Ordnung vereint werden.

Ein Funkblock mit ersten Organisationsinformationen oil, die gesendet werden sollen, besteht nach Fig 3 aus einer Trainingssequenz tseq zur empfangsseitigen Kanalschätzung und zwei Datenteilen, die beispielsweise in sechs Informationselemente IE1 bis IE6 gegliedert sind. Die Zuteilung der einzelnen Elemente der Gesamtheit der Organisationsinformationen oi wird durch die Struktur der Organisationsinformationen oi angegeben.

Die Erfindung beschreibt diese Struktur der Organisationsinformationen oi, die nicht wie beim GSM-Mobilfunksystem ein starres Schema der immer gleichbleibenden Übertragung von Organisationsinformationen oi vorsieht, sondern die Organistationsinformation oi bedarfsgerecht in die Rahmenstruktur einpaßt.

In der 3. Mobilfunkgeneration sollen manche Dienste flächendeckend und andere nur in bestimmten Funkzellen, beispielsweise im unlizensierten Heimbereich angeboten werden. Zu der Vielzahl von Diensten zählen Sprachdienste, Notrufdienste, Kurznachrichtendienste, Teletextdienste, Faksimiledienste, Internetdienste oder Bildübertragungsdienste, die jeweils auch mit unterschiedlichen Datenraten, Optionen und Sicherheitsmechanismen angeboten werden. über die Verfügbarkeit dieser Dienste, sowie über die Nachbarzellen, besondere Ereignisse wie Software Download oder anderer Informationen, die von allen Mobilstationen MS benötigt werden, informieren die Organisationsinformationen oi.

Entsprechend der Erfindung wird in Organisationsinformationen oi unterschieden, die ständig, häufig, selten oder nur auf Anfrage gesendet werden. Ständig benötigte Informationen sind die über die Standarddienste, z.B. über eine einfachen Sprachinformationensübertragung oder eine Paketdatenübertragung, für die individuelle Organisationsinformationen oiss, oipd in Informationselementen IE1 und IE2 in jedem Funkblock mit Organisationsinformationen oi übertragen werden.

Häufig benötigte Informationen sind die über zusätzliche Dienste oder über Nachbarzellen, die beispielsweise zur Übergabe einer Verbindung von Zelle zu Zelle benötigt werden. Nach einem Rotationsschema belegen diese Informationen die Informationselemente IE3 bis IE5.

Selten benötigte Dienste sind die über allgemeine Nachrichten im Netz, neue Programmversionen oder außergewöhnliche Dienste. Diese Informationen werden im sechsten Informationselemente IE6 gesendet. Ein Beispiel für Organisationsinformationen, die nur auf Anforderung gesendet werden, ist die Bekanntgabe der Installation einer neuen Basisstation BS, das Senden einer überlangen Trainingssequenz tseq zur Synchronisation oder die Aufforderung an die Mobilstationen MS, eine Basisstation BS für eine gewisse Zeit zu meiden, da ein sehr hochratiger Dienst große Teile oder die gesamten funktechnischen Ressourcen dieser Basisstation BS benötigt. Zumindest das sechste Informationselement IE6 kann für diese Informationen genutzt werden, wodurch die seltenen Dienste verdrängt werden. Ein Zeitgeber garantiert jedoch, daß alle Infomationen - außer den rein bedarfsbezogenen, in einem Rahmen höherer Ordnung, zumindest einmal gesendet werden.

Die Gesamtheit dieser Organisationsinformationen oi bildet einen Pool, der untergliedert wird, um für ein Senden im nächsten reservierten Zeitschlitz ts erste Organisationsinformationen oil zu extrahieren. Die übrigen, zweiten Organisationsinformationen oi2 werden zu späteren Zeitpunkten je nach ihrer Priorisierung gesendet. Die Priorisierung ist durch die Basisstation BS in Zusammenwirken mit dem Organisations- und Wartungszentrum OMC einstellbar.

Fig 4 umreißt kurz den Ablauf der Neustrukturierung des Sendens der Organisationsinformationen oi. In einem ersten Schritt wird entsprechend des eingestellten Schemas ein Senden von ersten Organisationsinformationen oil durchgeführt, wobei von Rahmen fr zu Rahmen fr sich der Inhalt der ersten Organisationsinformationen oil verändert. In einem zweiten Schritt erfolgt eine Anfrage einer Mobilstation MS nach einem selten Dienst, worauf die Basisstation BS überprüft, ob Informationen zu diesem Dienst verfügbar sind. Ist dies der Fall, so findet in einem dritten Schritt eine Neustrukturierung der Organisationsinformationen oi statt und die für den nachgefragten Dienst vorgesehenen Organisationsinformationen oi werden möglichst bald gesendet. Es findet teilweise ein Austausch zwischen den ersten und zweiten Organisationsinformationen oil, oi2 statt. Ansonsten bleibt die Struktur unverändert.

## Patentansprüche

1. Verfahren zur Übertragung von Organisationsinformationen (oi) von einer Basisstation (BS) zu Mobilstationen (MS) in einem Funk-Kommunikationssystem, bei dem innerhalb einer Funkzelle (Z) der Basisstation (BS) mehrere Dienste angeboten werden, **dadurch gekennzeichnet, daß** die Organisationsinformationen (oi) in erste und zweite Organisationsinformationen (oil, oi2) anhand der momentan nachgefragten Dienste untergliedert werden und bevorzugt die ersten Organisationsinformationen (oil) gesendet werden.

2. Verfahren nach Anspruch 1, bei dem
eine Neuuntergliederung der Organisationsinformationen (oi) bei einer Nachfrage eines Dienstes durch die Mobilstation (MS) oder durch eine netzseitige Komponente durchgeführt wird.

3. Verfahren nach einem der vorherigen Ansprüche, bei dem Organisationsinformationen (oiss, oipd) zur einfachen Sprachinformationensübertragung oder Paketdatenübertragung ständig den ersten Organisationsinformationen (oil) zugeteilt sind.

4. Verfahren nach einem der vorherigen Ansprüche, bei dem, die Elemente der Organisationsinformationen (oi) mit unterschiedlicher Häufigkeit innerhalb einer Rahmenstruktur der Übertragung gesendet werden.

5. Verfahren nach einem der vorherigen Ansprüche, bei dem einzelne Elemente der Organisationsinformationen (oi) nur auf Anfrage gesendet werden.

6. Verfahren nach einem der vorherigen Ansprüche, bei dem ein Zeitgeber das Senden der Organisationsinformationen (oi) überwacht, so daß eine Gruppe von Elementen der Organisationsinformationen (oi) auch ohne Anfrage, nach einer vorgebbaren Zeit zumindest einmal gesendet werden.

## Claims

1. Method for the transmission of organization information items (oi) from a base station (BS) to mobile stations (MS) in a radio communications system, in which a plurality of services are offered within a radio cell (Z) of the base station (BS), **characterized in that** the organization information items (oi) are subdivided into first and second organization information items (oil, oi2) on the basis of the services requested at a given moment and preferably the first organization information items (oil) are transmitted.

2. Method according to Claim 1, in which
renewed subdivision of the organization information items (oi) is carried out in the event of a request of a service by the mobile station (MS) or by a component at the network end.

3. Method according to one of the preceding claims, in which organization information items (oiss, oipd) for simple voice information transmission or packet data transmission are continuously allocated to the first organization information items (oil).

4. Method according to one of the preceding claims, in which the elements of the organization information items (oi) are transmitted with different frequency within a frame structure of the transmission.

5. Method according to one of the preceding claims, in which individual elements of the organization information items (oi) are transmitted only upon an inquiry.

6. Method according to one of the preceding claims, in which a timer monitors the transmission of the organization information items (oi), so that a group of elements of the organization information items (oi) are transmitted at least once after a predeterminable time, even without an inquiry.

## Revendications

1. Procédé pour la transmission d'informations d'organisation (oi) d'une station de base (BS) vers des stations mobiles (MS) dans un système de radiocommunication, dans lequel
plusieurs services sont offerts à l'intérieur d'une cellule (Z) de la station de base (BS), **caractérisé en ce que**
les informations d'organisation (oi) sont découpées en premières et secondes informations d'organisation (oil, oi2) sur la base des services momentanément demandés et les premières informations d'organisation (oil) sont envoyées préférentiellement.

2. Procédé selon la revendication 1, dans lequel
un nouveau découpage des informations d'organisation (oi) est exécuté lors d'une demande d'un service par la station mobile (MS) ou par un composant côté réseau.

3. Procédé selon l'une des revendications précédentes, dans lequel
les informations d'organisation (oiss, oipd) relatives à la simple transmission d'informations vocales ou transmission de données par paquets sont toujours affectées aux premières informations d'organisation (oil).

4. Procédé selon l'une des revendications précédentes, dans lequel
les éléments des informations d'organisation (oi) sont envoyés avec une fréquence différente à l'intérieur d'une structure de trame de la transmission.

5. Procédé selon l'une des revendications précédentes, dans lequel
des éléments individuels des informations d'organisation (oi) sont envoyés seulement sur demande.

6. Procédé selon l'une des revendications précédentes, dans lequel
une horloge contrôle l'envoi des informations d'organisation (oi) de manière à ce qu'un groupe d'éléments des informations d'organisation (oi) soit envoyé au moins une fois, même sans demande, au bout d'un temps définissable à l'avance.
